# EUROPÄISCHE PATENTSCHRIFT

(11) **EP 2 734 403 B1**
(45) Veröffentlichungstag und Bekanntmachung des Hinweises auf die Patenterteilung: **06.09.2017**
(21) Anmeldenummer: 12733687.3
(22) Anmeldetag: 05.07.2012
(51) Int. Cl.: B60N 2/02, B60N 2/06

(54) **HALTEVORRICHTUNG FÜR EINEN VERSTELLANTRIEB EINES KRAFTFAHRZEUGSITZES**
SUPPORTING DEVICE FOR AN ADJUSTMENT DRIVE FOR A SEAT OF AN AUTOMOTIVE VEHICLE
DISPOSITIF DE SUPPORT POUR UNE UNITÉ D'ENTRAÎNEMENT D'UN SIÈGE DE VÉHICULE AUTOMOBILE

(30) Priorität: 21.07.2011 DE 102011052045
(43) Veröffentlichungstag der Anmeldung: 28.05.2014
(73) Patentinhaber: Adient Luxembourg Holding S.à r.l., 2453 Luxembourg (LU)
(72) Erfinder: LANDSKRON, Robert, 40789 Monheim (DE); SCHÜRMANN, Thorsten, 51519 Odenthal (DE)
(74) Vertreter: Finger, Catrin
(86) Internationale Anmeldenummer: PCT/EP2012/063152
(87) Internationale Veröffentlichungsnummer: WO 2013/010809

(56) Entgegenhaltungen:
- EP-A2- 2 003 011
- FR-A1- 2 883 810
- FR-A1- 2 924 646

## Beschreibung

Die Erfindung betrifft eine Haltevorrichtung für einen Verstellantrieb eines Kraftfahrzeugsitzes, mit
- mindestens einer in einem Wellenmantel drehbar gelagerten Antriebswelle,
- mindestens einem Kanal zur Aufnahme der in dem Wellenmantel drehbar gelagerten Antriebswelle, die einenends mit einer Antriebseinheit und anderenends mit einer Verstelleinrichtung verbindbar ist.

Haltevorrichtungen der eingangs genannten Art werden an Kraftfahrzeugsitzen dazu verwendet, um die mit Antriebseinheiten - in der Regel Elektromotoren - verbundenen Antriebswellen an dem Kraftfahrzeugsitz anzuordnen, wo diese mit einer Verstelleinrichtung des Kraftfahrzeugsitzes verbunden sind, mit der der Kraftfahrzeugsitz an die Bedürfnisse des Nutzers angepasst werden kann. Typische Verstellantriebe sind bspw. Sitzlehnenversteller, Sitzneigungsversteller oder eine Sitzlängsverstellvorrichtung, wobei mittels der letztgenannten der Fahrzeugsitz gegenüber dem Fahrzeugboden in Längsachsenrichtung des Fahrzeugs positioniert werden kann. Eine derartige Haltevorrichtung ist beispielsweise aus der EP 2 003 011 A2 bekannt.

Zur Verbindung der Antriebseinheit, üblicherweise eines Elektromotors, mit der Verstelleinrichtung sind, Antriebswellen, insbesondere wenn diese flexibel ausgebildet sind, besonders geeignet, da mit diesen die Distanz zwischen dem Elektromotor und der Verstelleinrichtung gut überbrückt werden kann. Zum Schutz der Antriebswelle vor Beschädigungen, die diese im Falle eines Antriebs einer Sitzlängsverstellung bspw. dann erleiden könnte, wenn im Verstellbereich der Antriebswelle ein Hindernis angeordnet ist, weisen die bekannten Haltevorrichtungen der eingangs genannten Art mindestens einen Kanal auf, in welchem die in einem Wellenmantel drehbar gelagerte Antriebswelle gehalten ist. Die Abmessungen des Wellenmantels und des Kanalquerschnitts sind dabei aufeinander abgestimmt, um eine weitestgehend spielfrei Anordnung des Wellenmantels zu erreichen. Die Haltevorrichtung schützt die Antriebswelle vor Beschädigungen und gewährleistet damit einen weitestgehend störungsfreien Betrieb, wobei die Antriebswelle durch den diese koaxial umgebenden Wellenmantel vor äußeren Einflüssen geschützt ist.

Es hat sich jedoch herausgestellt, dass die gattungsgemäßen Haltevorrichtungen den Nachteil aufweisen, dass die in der Regel kraft- und/oder formschlüssig in dem Kanal gehaltenen Wellenmäntel dazu neigen, sich bei einem Antrieb der Antriebswelle mitzudrehen, wodurch es zu einer störenden Geräuschbelastung bei der Betätigung der Antriebseinheit kommt. Zudem besteht die Gefahr, dass der Wellenmantel aufgrund seiner Bewegung aus dem Kanal heraus in eine ungeschützte Position gelangt.

Hiervon ausgehend liegt der Erfindung die Aufgabe zugrunde, eine Haltevorrichtung der eingangs genannten Art bereitzustellen, welche eine zuverlässige, insbesondere verdrehsichere Anordnung des Wellenmantels erlaubt.

Die Erfindung löst die Aufgabe durch eine Haltevorrichtung mit den Merkmalen des Anspruchs 1. Vorteilhafte Weiterbildungen der Erfindungen sind in den abhängigen Ansprüchen angegeben.

Kennzeichnend für die erfindungsgemäße Haltevorrichtung ist, dass der Kanal zur abschnittsweise gegenüber der Kanallängsachse versetzten Positionierung des Wellenmantels derart ausgebildet ist, dass der Wellenmantel in zumindest einem Abschnitt gegenüber der Kanallängsachse geknickt und/oder gebogen ist. Die Erfindung geht davon aus, dass der Wellenmantel und der zur Aufnahme vorgesehene Kanal derart aufeinander abgestimmt sind, dass - wie bereits bei den aus dem Stand der Technik bekannten Haltevorrichtungen - der Wellenmantel in der Montagelage im Kanal der Haltevorrichtung zumindest abschnittsweise zwischen den Kanalseitenwänden des Kanals mindestens kraftschlüssig gehalten ist. Insofern liegt eine Abstimmung zwischen der Kanalbreite und dem eingesetzten Wellenmantel vor.

Die erfindungsgemäße Haltevorrichtung unterscheidet sich von den aus dem Stand der Technik bekannten Haltevorrichtungen dadurch, dass der Kanal derart ausgebildet ist, dass der Wellenmantel sich nicht - in Längsachsenrichtung des Kanals betrachtet - über die gesamte Kanallänge im Wesentlichen geradlinig erstreckt, sondern eine Ausbildung aufweist, die in einem Abschnitt eine gegenüber der Kanallängsachse, bzw. Kanalmittelachse versetzte Positionierung des Wellenmantels bewirkt. Durch die versetzte Positionierung ist der Wellenmantel in diesem Bereich gegenüber der Kanallängsachse geknickt und/oder gebogen, so dass dieser gegenüber einem Mitdrehen bei einem Antrieb der Antriebswelle zuverlässig gehemmt ist. Der Versatz der Kanallängsachse, bzw. die Biegung bzw. Knickung des Wellenmantels ist dabei derart, dass die Antriebswelle nach wie vor gegenüber dem Wellenmantel verdrehbar ist. Insofern verhindert die erfindungsgemäße Ausgestaltung der Haltevorrichtung aufgrund der versetzten Anordnung zuverlässig ein Mitdrehen des Wellenmantels und weist gleichzeitig eine hohe Funktionssicherheit auf.

Die konkrete Ausgestaltung des Kanals zur abschnittsweise gegenüber der Kanallängsachse versetzten Positionierung, d. h. bereichsweise geknickten oder gebogenen Anordnung des Wellenmantels ist dabei grundsätzlich frei wählbar. Nach einer besonders vorteilhaften Ausgestaltung der Erfindung ist jedoch vorgesehen, dass der Kanal mindestens zwei in Kanallängsachsenrichtung im Abstand voneinander von einer ersten Kanalseitenwand vorstehenden Vorsprünge unterschiedlicher Länge aufweist, wobei mindestens zwei an einer gegenüberliegenden Kanalseitenwand korrespondierend angeordnete Vorsprünge derart ausgebildet sind, dass der Abstand der einander gegenüberliegenden Vorsprünge konstant ist.

Gemäß dieser Weiterbildung der Erfindung ist vorgesehen, dass der Abstand der einander zugeordneten an den gegenüberliegenden Seitenwänden angeordneten und den Verlauf des Wellenmantels in diesem Bereich bestimmenden Vorsprünge konstant ist. Nachdem darüber hinaus zwei benachbarte Vorsprünge einer Kanalseitenwand - in Kanallängsachsenrichtung betrachtet - eine unterschiedliche Länge aufweisen, d. h. unterschiedlich weit von der Kanalseitenwand in den Kanal vorstehen, weist ein Wellenmantel mit einem im Wesentlichen mit dem Abstand der Vorsprünge übereinstimmenden Außendurchmesser in der Montagelage im Bereich dieser Vorsprünge eine gegenüber der Kanallängsachse versetzte Anordnung auf, nachdem der Wellenmantel entsprechend der Lage der Vorsprünge gebogen bzw. gegenüber der Kanallängsachse geknickt wird.

Die Ausgestaltung des Kanals mit von den Kanalseitenwänden vorstehenden Vorsprüngen stellt eine besonders einfache Ausgestaltung dar, die es ermöglicht, den Wellenmantel in Kanallängsachsenrichtung abschnittsweise versetzt zu positionieren. Die vorteilhafte Weiterbildung ermöglicht somit eine besonders einfache und kostengünstige Herstellung einer Haltevorrichtung mit einer verdrehfesten Anordnung des Wellenmantels im Kanal der Haltevorrichtung.

Grundsätzlich wird bereits durch eine Haltevorrichtung mit einer nur in einem Bereich des Kanals versetzten Positionierung des Wellenmantels eine verdrehsichere Anordnung des Wellenmantels erreicht. Nach einer besonders vorteilhaften Ausgestaltung der Erfindung ist jedoch vorgesehen, dass der Kanal zur wellenförmig gegenüber der Kanallängsachse versetzten Positionierung des Wellenmantels ausgebildet ist. Gemäß dieser Ausgestaltung der Erfindung ist vorgesehen, dass der Kanal bzw. die Kanalseitenwände derart ausgebildet sind, dass sich der Wellenmantel in seiner Einbaulage in dem Kanal nicht geradlinig entlang der Kanallängsachse erstreckt, sondern gegenüber der Kanallängsachsenrichtung einen wellenförmigen Verlauf aufweist. D. h. eine Mittellinie des Wellenmantels schneidet die Kanallängsachse an im Abstand voneinander angeordneten Punkten, wobei vorzugsweise der Wellenmantel in der Montagelage einen gleichförmig wellenförmigen Verlauf aufweist.

Die Ausgestaltung des Kanals zur wellenförmigen Positionierung ist grundsätzlich frei wählbar. So kann dies bspw. durch einen Kanal erreicht werden, dessen Seitenwände einen konstanten, an den Außendurchmesser des Wellenmantels abgestimmten Abstand aufweisen, gleichzeitig jedoch in Kanallängsachsenrichtung betrachtet nicht geradlinig sondern wellenförmig verlaufen. Nach einer besonders vorteilhaften Ausgestaltung der Erfindung ist vorgesehen, dass die Vorsprünge zur wellenförmig gegenüber der Kanallängsachse versetzten Positionierung des Wellenmantels ausgebildet sind. Demgemäß weisen die in Kanallängsachsenrichtung betracht benachbart zueinander angeordneten Vorsprünge in festgelegten Intervallen unterschiedliche Längen auf. Gemäß einer möglichen Ausgestaltung dieser Weiterbildung kann bspw. vorgesehen sein, dass in Kanallängsachsenrichtung betrachtet hintereinander abwechselnd Vorsprünge mit einer ersten und einer zweiten Länge angeordnet sind, wobei an der gegenüberliegenden Kanalseitenwand entsprechend Vorsprünge der anderen Länge angeordnet sind, so dass der Abstand zwischen den Vorsprüngen konstant ist. Der Wellenmantel - dessen Außendurchmesser an den Abstand der Vorsprünge angepasst ist - weist dann in der Montagelage einen wellenförmigen Verlauf auf. Diese Ausgestaltung der Erfindung lässt sich besonders einfach und kostengünstig herstellen und gewährleistet überdies in besonders zuverlässiger Weise eine Verdrehsicherung des Wellenmantels gegenüber dem Kanal.

Die Ausgestaltung der Vorsprünge ist ebenfalls grundsätzlich frei wählbar. Nach einer besonders vorteilhaften Ausgestaltung der Erfindung ist jedoch vorgesehen, dass die Vorsprünge durch von den Kanalseitenwänden im Abstand voneinander vorstehende Stege gebildet sind, wobei mindestens zwei benachbart an einer Kanalseitenwand angeordnete Stege eine unterschiedliche Länge aufweisen und wobei die an der gegenüberliegenden Kanalseitenwand angeordneten Stege derart ausgebildet sein, dass der Abstand zwischen den einander gegenüberliegenden Stegen konstant ist.

Wie bereits an obiger Stelle dargelegt, genügt bereits eine Ausgestaltung des Kanals, welche zu einer nur in einem Abschnitt versetzten Positionierung des Wellenmantels führt, zu einer verdrehsicheren Anordnung des Wellenmantels. Nach einer besonders vorteilhaften Ausgestaltung der Erfindung ist im Falle der Verwendung von als Stegen ausgebildeten Vorsprüngen vorgesehen, dass die Stegenden, welche an dem Wellenmantel anliegen, eine Profilierung, insbesondere ein Zahnprofil aufweisen. Eine entsprechende Ausgestaltung der mit dem Wellenmantel in Kontakt stehenden Stegenden sichert die Position des Wellenmantels in der Montagelage in ergänzender Weise und verhindert besonders zuverlässig, dass es im Falle einer Verstellung der Antriebswelle zu einem Verdrehen des Wellenmantels kommt. Insbesondere wird durch diese Ausgestaltung der Stegenden auch bei einer nur geringfügig abschnittsweise versetzten Positionierung des Wellenmantels eine zuverlässige Lagesicherung erreicht.

Auch die nach einer weiteren Ausgestaltung der Erfindung vorgesehen Ausformung der Stegenden mit einem konkaven oder konvexen Verlauf und/oder mit im Wesentlichen parallel zur Kanallängsachse ausgerichteten Stegen sichert die Lage des Wellenmantels in ergänzender Weise. Bei im Wesentlichen parallel zur Kanallängsachse ausgerichteten Stegenden wird zudem erreicht, dass die an die Stegenden angrenzenden Kanten aufgrund der abschnittsweise gekrümmten bzw. gebogenen Einbaulage des Wellenmantels in den zumeist flexiblen Wellenmantel eindringen, wodurch eine ergänzende Lagesicherung, insbesondere in axialer Richtung erreicht werden kann. Ein Einwirken auf den Wellenmantel kann darüber hinaus dadurch verbessert werden, dass die Stege gemäß einer vorteilhaften Weiterbildung der Erfindung gegenüber einer Kanallängsachse geneigt sind, wodurch die Kanten zwischen den Stegenden und den Seitenfläche der Stege einen spitzen Winkel bilden, welcher besonders gut dazu geeignet ist, um klingenartig in den Wellenmantel einzudringen.

Die Ausgestaltung des Kanalgrundes ist grundsätzlich frei wählbar. Nach einer besonders vorteilhaften Ausgestaltung der Erfindung ist jedoch vorgesehen, dass der Kanalgrund eine konkave oder konvexe Form aufweist, wodurch sich eine besonders gute Lagesicherung des Wellenmantels im Kanal ergibt.

Grundsätzlich kann bereits durch eine entsprechende Abstimmung von Wellenmantelaußendurchmesser und Kanalbreite eine Montagelage des Wellenmantels hergestellt werden, in der dieser zuverlässig kraft- und/oder formschlüssig gehalten ist. Nach einer besonders vorteilhaften Ausgestaltung ist ferner vorgesehen, dass Haltelaschen vorgesehen sind, die in Richtung auf eine dem Kanalgrund gegenüberliegende Kanalöffnung vorstehen. Die Haltelaschen, die besonders vorteilhafterweise an ihren freien Enden eine in Richtung auf die Kanallängsachse vorstehende Rastnase aufweisen, sichern in besonderer Weise die Position des Wellenmantels in Richtung auf die Kanalöffnung. Einem Herausgleiten des Wellenmantels aus dem Kanal wird somit in besonders wirksamer Weise vorgebeugt, wobei die federnd ausgebildeten Haltelaschen eine einfache Montage des Wellenmantels ermöglichen.

Die Ausgestaltung der Haltevorrichtung ist- wie bereits eingangs dargelegt - grundsätzlich frei wählbar. Insofern sind auch die zur Herstellung der Haltevorrichtung verwendbaren Materialien unter Festigkeits- sowie Kostengesichtspunkten frei wählbar. Nach einer besonders vorteilhaften Ausgestaltung der Erfindung ist jedoch vorgesehen, dass diese einstückig aus einem faserverstärkten, insbesondere glasfaser- oder kohlefaserverstärkten Kunststoff gebildet ist. Diese Ausgestaltung der Erfindung ermöglicht eine besonders einfach und kostengünstige Herstellung einer besonders stabilen Haltevorrichtung, die sich zuverlässig zur Anordnung des Wellenmantels verwenden lässt.

Grundsätzlich kann die die Antriebswelle antreibende Antriebseinheit an beliebiger Stelle angeordnet sein, sofern eine zuverlässige Kopplung mit der Antriebswelle möglich ist. So kann die Haltevorrichtung auch mit einem Verbindungsabschnitt ausgestaltet sein, in dem die Antriebseinheit mit der Antriebswelle verbindbar ist. Gemäß einer besonders vorteilhaften Ausgestaltung der Erfindung ist vorgesehen, dass die Haltevorrichtung einen Aufnahmeabschnitt zur Anordnung der Antriebseinheit, insbesondere eines Elektromotors aufweist. Diese Ausgestaltung ermöglicht eine besonders gute Lagersicherung der Antriebseinheit sowie dessen Verbindung mit der Antriebswelle.

Ein Ausführungsbeispiel der Erfindung wird nachstehend mit Bezug auf die Zeichnungen näher erläutert. In den Zeichnungen zeigen:
- Fig. 1: eine perspektivische Darstellung eines Verstellantriebs mit einer Haltevorrichtung, die an gegenüberliegenden Enden an jeweils einer Sitzoberschiene angeordnet ist;
- Fig. 2: eine Draufsicht auf einen Kanal der Haltevorrichtung von Fig. 1 und
- Fig. 3: eine vergrößerte Darstellung eines Ausschnitts des Kanals von Fig. 2.

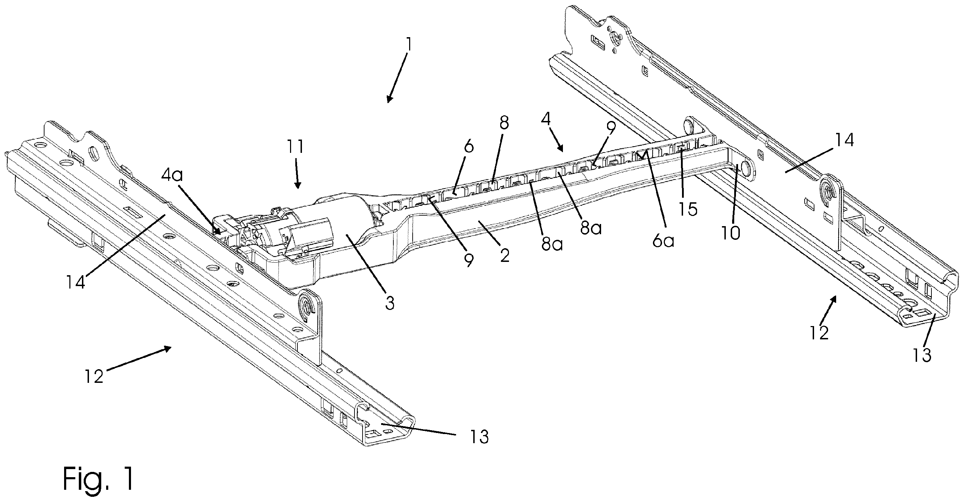

In Fig. 1 ist in einer perspektivischen Darstellung ein Verstellantrieb 1 einer Sitzlängsverstellung dargestellt. Zur Längseinstellung der Position eines hier nicht dargestellten Fahrzeugsitzes weist der Verstellantrieb 1 eine als Elektromotor 3 ausgebildete Antriebseinheit auf, welche in einem Aufnahmeabschnitt 11 einer Haltevorrichtung 2 angeordnet ist. Die Haltevorrichtung 2 erstreckt sich zwischen den Sitzschienen 12 und ist mit ihren endseitigen Anschlussflanschen 10 an den gegenüberliegenden Sitzoberschienen 14 befestigt. Die Anschlussflansche 10 sind dabei an den dem Elektromotor 3 gegenüberliegenden Enden zweier Kanäle 4, 4a angeordnet. Zur Verstellung der Sitzoberschiene 14 gegenüber einer Sitzunterschiene 13 der Kraftfahrzeugsitzschiene 12 sind innerhalb der Kraftfahrzeugsitzschienen 12 hier nicht dargestellte Verstelleinrichtungen angeordnet. Eine Kopplung der Verstelleinrichtungen mit der Antriebseinheit 3 erfolgt über flexible Antriebswellen. Die Antriebswellen sind dabei drehbar in Wellenmänteln 5 gelagert, welche zur Lagesicherung an der Haltevorrichtung 2 in den Kanälen 4, 4a angeordnet sind.

Zur Lagesicherung der Wellenmäntel 5 in den Kanälen 4, 4a weisen diese in Kanallängsachsenrichtung betrachtet im Abstand voneinander angeordnete, schräg zu den Kanalseitenwänden 6, 6a der Kanäle verlaufende Stege 8, 8a auf, wobei der Abstand der Stege 8, 8a - die gegenüberliegend an den Kanalseitenwänden 6, 6a angeordnet sind - konstant ist. In Kanallängsachsenrichtung betrachtet ragen die benachbart zueinander an einer Kanalseitenwand 6, 6a angeordneten Stege 8, 8a mit voneinander abweichenden Längen unterschiedlich weit in den Kanal 4 hinein. Im Bereich dieser Stege 8, 8a weist der Wellenmantel 5 eine geknickt bzw. gegenüber der Kanallängsachse gebogene Form auf, so dass der Wellenmantel 5 versetzt gegenüber der Kanallängsachse angeordnet ist. Diese versetzt erfolgende Lagerung des Wellenmantels 5 gewährleistet eine besonders hohe Verdrehsicherheit des Wellenmantels 5 im Falle eines Verdrehens der in dem Wellenmantel 5 verdrehbar angeordneten Antriebswelle.

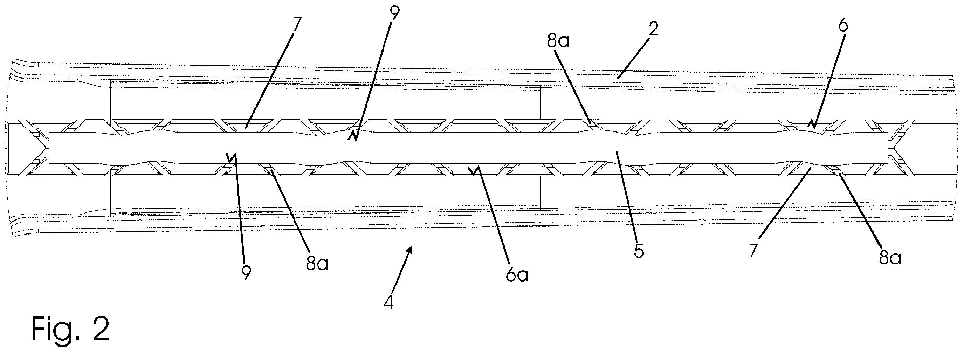

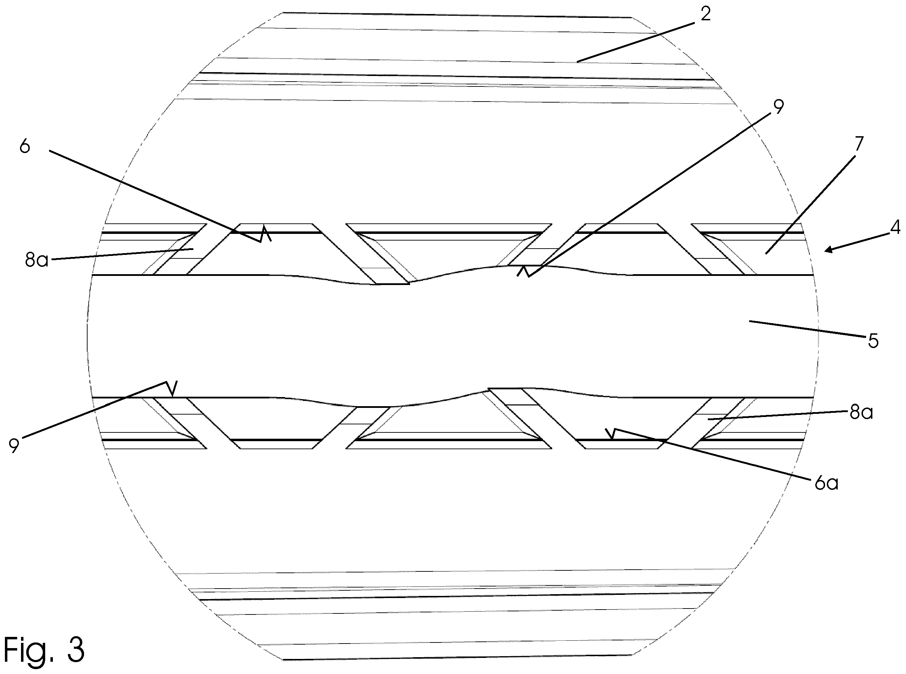

Aufgrund der schräg verlaufenden Ausrichtung der Stege 8, 8a gegenüber den Kanalseitenwänden 6, 6a bilden die im Wesentlichen parallel zu der Kanallängsachse verlaufenden Stegenden 9 mit den sich an die Stegenden 9 anschließenden Seitenflächen einen spitzen Winkel, welcher - wie in Fig. 2 und 3 dargestellt - ein Eindringen der Stegkanten in den in der Regel flexiblen Wellenmantel 5 erlaubt, wodurch der Wellenmantel 5 in ergänzender Weise gegen eine axiale Verlagerung sowie Verdrehen gegenüber dem Kanal 4 gesichert ist.

Zur ergänzenden Lagesicherung des Wellenmantels 5 in dem Kanal 4 weist die Haltevorrichtung 2 darüber hinaus von einem Kanalgrund 7 in Richtung auf die Kanalöffnung vorstehend, federnd gelagerte Haltelaschen 15 auf, welche in der Montagelage des Wellenmantels 5 diesen mit Haltenasen umgreifen, so dass der Wellenmantel 5 zuverlässig in dem Kanal 4 angeordnet ist.

Insgesamt bietet der Verstellantrieb 1 mit der zuverlässig über die endseitigen Anschlussflansche 10 an den Sitzoberschienen 14 angeordneten Haltevorrichtung 2 eine hohe Betriebssicherheit, ohne dass es im Betrieb zu einer störenden Geräuschentwicklung durch ein Verdrehen des Wellenmantels innerhalb des Kanals 4 kommt.

## Patentansprüche

1. Haltevorrichtung für einen Verstellantrieb eines Kraftfahrzeugsitzes, mit
- mindestens einer in einem Wellenmantel drehbar gelagerten Antriebswelle,
- mindestens einem Kanal zur Aufnahme der in dem Wellenmantel drehbar gelagerten Antriebswelle,
- die einenends mit einer Antriebseinheit und anderenends mit einer Verstelleinrichtung verbindbar ist,
**dadurch gekennzeichnet, dass**
- der Kanal (4, 4a) zur abschnittweise gegenüber der Kanallängsachse versetzten Positionierung des Wellenmantels (5) derart ausgebildet ist, dass der Wellenmantel (5) in zumindest einem Abschnitt gegenüber der Kanallängsachse geknickt und/oder gebogen ist.

2. Haltevorrichtung nach Anspruch 1, **dadurch gekennzeichnet, dass** der Kanal mindestens zwei in Kanallängsachsenrichtung im Abstand voneinander von einer ersten Kanalseitenwand (6) vorstehende Vorsprünge (8) unterschiedlicher Länge aufweist, wobei mindestens zwei an einer gegenüberliegenden Kanalseitenwand (6a) korrespondierend angeordnete Vorsprünge (8a) derart ausgebildet sind, dass der Abstand der einander gegenüberliegenden Vorsprünge (8, 8a) konstant ist.

3. Haltevorrichtung nach Anspruch 1 oder 2, **dadurch gekennzeichnet, dass** der Kanal (4, 4a) zu einer wellenförmig gegenüber der Kanallängsachse versetzten Positionierung des Wellenmantels (5) ausgebildet ist.

4. Haltevorrichtung nach Anspruch 2 oder Anspruch 3 kombiniert mit Anspruch 2, **dadurch gekennzeichnet, dass** die Vorsprünge (8, 8a) zur wellenförmig gegenüber der Kanallängsachse versetzten Positionierung des Wellenmantels (5) ausgebildet sind.

5. Haltevorrichtung nach einem der Ansprüche 2 bis 4, **dadurch gekennzeichnet, dass** die Vorsprünge durch von den Kanalseitenwänden (6, 6a) im Abstand voneinander vorstehende Stege (8, 8a) gebildet sind, wobei mindestens zwei benachbart an einer Kanalseitenwand (6) angeordnete Stege (8, 8a) eine unterschiedliche Länge aufweisen, und wobei die an der gegenüberliegenden Kanalseitenwand (6, 6a) angeordneten Stege (8, 8a) derart ausgebildet sind, dass der Abstand zwischen den einander gegenüberliegenden Stegenden (9) konstant ist.

6. Haltevorrichtung nach Anspruch 5, **dadurch gekennzeichnet, dass** die Stegenden (9) eine Profilierung, insbesondere ein Zahnprofil aufweisen.

7. Haltevorrichtung nach Anspruch 5 oder 6, **dadurch gekennzeichnet, dass** die Stegenden (9) einen konkaven oder konvexen Verlauf aufweisen und/oder im Wesentlichen parallel zur Kanallängsachse ausgerichtet sind.

8. Haltevorrichtung nach einem der vorhergehenden Ansprüche, **dadurch gekennzeichnet, dass** ein Kanalgrund (7) des Kanals (4, 4a) eine konkave oder konvexe Form aufweist.

9. Haltevorrichtung nach einem der vorhergehenden Ansprüche, **dadurch gekennzeichnet, dass** diese einstückig aus einem faserverstärkten, insbesondere glasfaser- oder kohlefaserverstärkten Kunststoff gebildet ist, in deren Kanal (4, 4a) dann der Wellenmantel angeordnet wird.

10. Haltevorrichtung nach Anspruch 8 oder 9, **gekennzeichnet durch** eine in Richtung auf eine dem Kanalgrund (7) gegenüberliegende Kanalöffnung vorstehende federnde Haltelasche (15).

11. Haltevorrichtung nach Anspruch 10, **dadurch gekennzeichnet, dass** die Haltelaschen (15) in Richtung auf die Kanallängsachse vorstehende Rastnasen aufweisen.

12. Haltevorrichtung nach einem der Ansprüche 5-7 oder einem der Ansprüche 8-11 kombiniert mit einem der Ansprüche 5-7, **dadurch gekennzeichnet, dass** die Stege (8, 8a) gegenüber der Kanallängsachse geneigt sind.

13. Haltevorrichtung nach einem der vorhergehenden Ansprüche, **gekennzeichnet durch** einen Aufnahmeabschnitt (11) zur Anordnung einer Antriebseinheit, insbesondere eines Elektromotors.

## Claims

1. A holding device for an adjustment drive of a motor vehicle seat, with:
- at least one drive shaft which is mounted rotatably in a shaft casing,
- at least one channel for receiving the drive shaft which is mounted rotatably in the shaft casing,
- which is connectable at one end to a drive unit and at the other end to an adjustment device,
**characterized in that**
the channel (4, 4a) is formed for positioning the shaft casing (5) in a manner partially offset in relation to the longitudinal axis of the channel in such a manner that the shaft casing (5) is kinked and/or bent relative to the longitudinal axis of the channel in at least one section.

2. The holding device according to claim 1, **characterized in that** the channel has at least two projections (8) of a different length that project from a first channel side wall (6) and are spaced from each other in the direction of the longitudinal axis of the channel, wherein at least two projections (8a) that are correspondingly arranged on an opposite channel side wall (6a) are designed such that the spacing of the opposing projections (8, 8a) is constant.

3. The holding device according to claim 1 or 2, **characterized in that** the channel (4, 4a) is designed to position the shaft casing (5) offset in a wavy manner relative to the longitudinal axis of the channel.

4. The holding device according to claim 2 or claim 3 combined with claim 2, **characterized in that** the projections (8, 8a) are designed to position the shaft casing (5) offset in a wavy manner relative to the longitudinal axis of the channel.

5. The holding device according to one of the claims 2 to 4, **characterized in that** the projections are formed by bars (8, 8a) that project from the channel side walls (6, 6a) at a distance from each other, wherein at least two bars (8, 8a) arranged adjacent to each other on a channel side wall (6) have a different length, and wherein the bars (8, 8a) arranged on the opposite channel side wall (6, 6a) are configured so that the distance between the opposing bar ends (9) is constant.

6. The holding device according to claim 5, **characterized in that** the bar ends (9) have a profile, in particular a toothed profile.

7. The holding device according to claim 5 or 6, **characterized in that** the bar ends (9) have a concave or convex contour and/or are aligned substantially parallel to the longitudinal channel axis.

8. The holding device according to one of the preceding claims, **characterized in that** a channel base (7) of the channel (4, 4a) has a concave or convex shape.

9. The holding device according to one of the preceding claims, **characterized in that** it is formed as a single piece from a fiber-reinforced, in particular a fiberglass-reinforced or carbon fiber-reinforced plastic, in whose channel (4, 4a) the shaft casing is then arranged.

10. The holding device according to claim 8 or 9, **characterized by** an elastic holding lug (15) that projects towards a channel opening opposite the channel base (7).

11. The holding device according claim 10, **characterized in that** the holding lugs (15) have detent lugs that project in the direction of the longitudinal channel axis.

12. The holding device according to one of the claims 5 to 7 or one of claims 8 to 11 combined with one of claims 5 to 7, **characterized in that** the bars (8, 8a) are angled relative to the longitudinal channel axis.

13. The holding device according to one of the preceding claims, **characterized by** a receiving section (11) for arranging a drive unit, in particular an electric motor.

## Revendications

1. Dispositif de retenue pour un entraînement de réglage d'un siège de véhicule automobile, comprenant :
- au moins un arbre d'entraînement supporté à rotation dans une enveloppe d'arbre,
- au moins un canal pour recevoir l'arbre d'entraînement supporté à rotation dans l'enveloppe d'arbre,
- qui peut être connecté à une extrémité à une unité d'entraînement et à l'autre extrémité à un dispositif de réglage,
**caractérisé en ce que**
- le canal (4, 4a) est réalisé en vue de positionner l'enveloppe d'arbre (5) en partie de manière décalée par rapport à l'axe longitudinal du canal, de telle sorte que l'enveloppe d'arbre (5) soit fléchie et/ou cintrée dans au moins une portion par rapport à l'axe longitudinal du canal.

2. Dispositif de retenue selon la revendication 1, **caractérisé en ce que** le canal présente au moins deux saillies (8) de différentes longueurs faisant saillie à distance l'une de l'autre dans la direction de l'axe longitudinal du canal depuis une première paroi latérale de canal (6), au moins deux saillies (8a) disposées de manière correspondante au niveau d'une paroi latérale de canal opposée (6a) étant réalisées de telle sorte que la distance entre les saillies opposées l'une à l'autre (8, 8a) soit constante.

3. Dispositif de retenue selon la revendication 1 ou 2, **caractérisé en ce que** le canal (4, 4a) est réalisé en vue d'un positionnement de l'enveloppe d'arbre (5) décalé sous forme ondulée par rapport à l'axe longitudinal du canal.

4. Dispositif de retenue selon la revendication 2 ou la revendication 3 combinée à la revendication 2, **caractérisé en ce que** les saillies (8, 8a) sont réalisées en vue d'un positionnement de l'enveloppe d'arbre (5) décalé sous forme ondulée par rapport à l'axe longitudinal du canal.

5. Dispositif de retenue selon l'une quelconque des revendications 2 à 4, **caractérisé en ce que** les saillies sont formées par des nervures (8, 8a) faisant saillie à distance les unes des autres depuis les parois latérales du canal (6, 6a), au moins deux nervures (8, 8a) disposées en position adjacente au niveau d'une paroi latérale de canal (6) présentant une longueur différente, et les nervures (8, 8a) disposées au niveau de la paroi latérale de canal opposée (6, 6a) étant réalisées de telle sorte que la distance entre les extrémités mutuellement opposées (9) des nervures soit constante.

6. Dispositif de retenue selon la revendication 5, **caractérisé en ce que** les extrémités de nervures (9) présentent un profilage, en particulier un profil denté.

7. Dispositif de retenue selon la revendication 5 ou 6, **caractérisé en ce que** les extrémités de nervures (9) présentent une allure concave ou convexe et/ou sont orientées essentiellement parallèlement à l'axe longitudinal du canal.

8. Dispositif de retenue selon l'une quelconque des revendications précédentes, **caractérisé en ce qu'**une base de canal (7) du canal (4, 4a) présente une forme concave ou convexe.

9. Dispositif de retenue selon l'une quelconque des revendications précédentes, **caractérisé en ce que** celui-ci est formé d'une seule pièce à partir d'un plastique renforcé par des fibres, en particulier un plastique renforcé par des fibres de verre ou de carbone, dans le canal duquel (4, 4a) est ensuite disposée l'enveloppe d'arbre.

10. Dispositif de retenue selon la revendication 8 ou 9, **caractérisé par** une patte de retenue élastique (15) faisant saillie dans la direction d'une ouverture de canal opposée à la base de canal (7).

11. Dispositif de retenue selon la revendication 10, **caractérisé en ce que** les pattes de retenue (15) présentent des ergots d'encliquetage faisant saillie dans la direction de l'axe longitudinal du canal.

12. Dispositif de retenue selon l'une quelconque des revendications 5 à 7, ou selon l'une quelconque des revendications 8 à 11 combinées avec l'une quelconque des revendications 5 à 7, **caractérisé en ce que** les nervures (8, 8a) sont inclinées par rapport à l'axe longitudinal du canal.

13. Dispositif de retenue selon l'une quelconque des revendications précédentes, **caractérisé par** une portion de réception (11) destinée à recevoir une unité d'entraînement, en particulier un moteur électrique.
